(19) **Europäisches Patentamt / European Patent Office / Office européen des brevets**

(11) **EP 3 583 020 B1**

(12) # EUROPEAN PATENT SPECIFICATION

(45) Date of publication and mention of the grant of the patent:
**29.06.2022 Bulletin 2022/26**

(21) Application number: **18709396.8**

(22) Date of filing: **13.02.2018**

(51) International Patent Classification (IPC):
**B62M 6/45** *(2010.01)*    **B62M 6/50** *(2010.01)*
**B62M 6/60** *(2010.01)*    **B62M 6/65** *(2010.01)*

(52) Cooperative Patent Classification (CPC):
**B62M 6/60; B62M 6/45; B62M 6/50**

(86) International application number:
**PCT/IB2018/050872**

(87) International publication number:
**WO 2018/150319 (23.08.2018 Gazette 2018/34)**

(54) **SYSTEM FOR CONTROLLING THE ELECTRIC MOTOR OF A PEDAL-ASSISTED BICYCLE**

SYSTEM ZUR STEUERUNG DES ELEKTROMOTORS EINES PEDALGESTÜTZTEN FAHRRADS

SYSTÈME DE COMMANDE DU MOTEUR ÉLECTRIQUE D'UNE BICYCLETTE À PÉDALES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.02.2017 IT 201700017186**

(43) Date of publication of application:
**25.12.2019 Bulletin 2019/52**

(73) Proprietor: **ZEHUS S.p.A.**
**20124 Milano (IT)**

(72) Inventors:
• **LISANTI, Paolo**
**20122 Milano (IT)**

• **BERRETTA, Daniele**
**20122 Milano (IT)**
• **SEGATO, Marcello**
**20122 Milano (IT)**

(74) Representative: **Penza, Giancarlo**
**Bugnion S.p.A.**
**Viale Lancetti, 17**
**20158 Milano (IT)**

(56) References cited:
**WO-A1-2013/124764**    **GB-A- 2 540 962**
**US-A- 5 992 553**    **US-A1- 2015 292 934**
**US-A1- 2016 016 636**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical field of the invention

The present invention concerns the sector of pedal-assisted bicycles, that is, a particular type of bicycle equipped with an electric motor that is suitable for supplying additional power with respect to that provided by the user.

The present invention finds particular, but not exclusive application in the sector of mountain bikes and in the sector of racing bicycles.

In particular, the present invention concerns a system for controlling the electric motor of the pedal-assisted bicycle.

### Prior Art

Various control algorithms are known in the field of pedal-assisted bicycles and they principally differ in the aims they intend to achieve. For example, some algorithms prioritize the comfort of the cyclist over battery duration, whereas others aim instead at increasing the autonomy per charge, a result that is essentially achieved by means of regenerative braking by the motor, which in these circumstances operates as a generator that recharges the battery, thus increasing the effort required of the cyclist in some stages of motion.

Alternatively, autonomy is increased by increasing the size of the batteries, resulting in an increase in the weight and dimensions of the bicycle, as well as in increased costs.

US 2016/016636 A1 discloses an implementation of a bicycle 100 comprising a power and control system 250 for assisting the powering of the movement of the bicycle 100 by means of a motor 280, a rechargeable battery pack 260 and a microcontroller 282.

The microcontroller 282 controls the motor 280 in order to optimize the pedaling cadence/force set in advance by the cyclist, such as for example maximum pedaling force.

### Brief summary of the invention

The aim of the present invention is to provide a system for controlling the electric motor of a pedal-assisted bicycle which makes it possible to optimize management of the energy flows in the bicycle, particularly between the motor and the batteries, and thus to increase autonomy, without compromising the main function of pedal-assistance for the cyclist on the part of the motor.

This aim and others as well are achieved by a control system for controlling the electric motor of a pedal-assisted bicycle according to claim 1.

The dependent claims define possible advantageous embodiments of the invention.

### Brief description of the drawings

For a better understanding of the invention and appreciation of the advantages thereof, several non-limiting example embodiments shall be described herein below, referring to the attached figures, of which:

- Figure 1 is a schematic side view of a pedal-assisted bicycle equipped with a system for controlling the electric motor thereof according to a possible embodiment of the invention;
- Figure 2 is a block diagram of a system for controlling the electric motor of a pedal-assisted bicycle according to a possible embodiment of the invention;
- Figure 3 shows a curve illustrating a possible relationship between the resisting torque $T_{env}$, a reference dividing parameter $\alpha$ and a weight $\beta$ provided by a dividing module of the control system according to a possible embodiment,
- Figure 4 is a schematic illustration of an on-screen display of a user interface device of the control system according to an embodiment of the invention.

### Detailed description of the invention

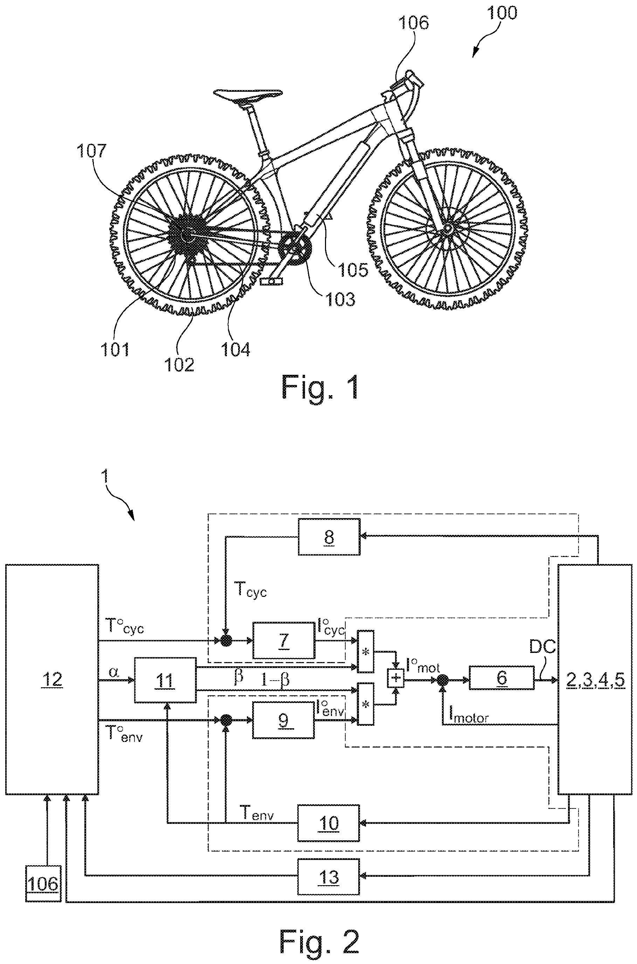

With reference to Figure 1, a pedal-assisted bicycle is indicated in its entirety by reference number 100.

The bicycle 100 comprises an electric motor 101 associated with one wheel 102 of the bicycle, preferably the rear wheel.

The bicycle 100 further comprises a pedal-thrust group 103, by means of which the user can supply power to the bicycle, and it is connected to one of the wheels, preferably the same wheel 102 with which the motor 101 is associated, by means of a transmission 104, for example a chain drive transmission.

A rechargeable battery 105 is connected to the motor 101, it supplies energy to the motor 101 for its operation and it is recharged by the motor 101 when the motor acts as a generator.

The bicycle 100 comprises a system for controlling the electric motor 1 and Figure 2 illustrates a possible block diagram representing the operation thereof.

The system 1 comprises a minimum set of sensors underlying the operation of the system.

In particular, these sensors comprise at least:

- a pedal-thrust cadence sensor 2 configured to detect cadence, that is, the pedal-thrust rate exerted by the cyclist on the pedal-thrust group 103, and configured to generate a signal representive of the pedal-thrust rate;
- a pedal-thrust torque sensor 3 configured to detect the torque applied by the cyclist on the pedal-thrust group 103 and configured to generate a signal representive of the torque applied by the cyclist;
- an acceleration or speed sensor 4 configured to generate a signal representive of the acceleration or speed of the bicycle. This sensor can be variously configured. For example, it can comprise an accelerometer, or an angular velocity sensor associated with a wheel, from which it is possible to obtain the linear velocity of the bicycle and, by derivation therefrom, the acceleration of the bicycle;
- a sensor 5 for detecting the power of the motor 101 and configured to generate a signal representive of the power of the motor 101; this sensor 5 can be incorporated in the motor 101 or external to the motor.

For example, the power $P_{mot}$ of the motor 101 can be obtained by means of the following relationship:

$$P_{mot} = P_{batt} \cdot \eta_{motor} = I_{battery} \cdot V_{pack} \cdot \eta_{motor} = I_{motor} \cdot DC \cdot V_{pack} \cdot \eta_{motor}$$

in which:

- $I_{motor}$ is the current of the motor, which is the quantity that is measured;
- DC is the so-called "duty cycle" of the motor;
- $V_{pack}$ is the supply voltage of the motor which is supplied by the battery 105;
- $\eta_{motor}$ is the efficiency of the motor which generally depends on the rotational speed of the motor.

The motor 101 is preferably controlled by a closed-loop controller 6 that carries out feedback control of the motor, preferably current feedback control.

A motor reference command signal $I°_{mot}$, which is for example a reference current, is supplied at the input to the closed-loop controller 6 of the motor.

The controller 6 acts in such a manner that the actual current of the motor $I_{motor}$, measured for example by the power sensor 5 described hereinabove, follows the trend of the reference current $I°_{mot}$.

We shall now describe how the system 1 according to the invention determines the motor reference command signal $I°_{mot}$.

The system 1 comprises a closed-loop controller 7 of the torque applied by the cyclist on the pedal-thrust group 103.

This controller 7 receives at the input a reference cyclist torque $T°_{cyc}$ and compares it with the effective torque applied by the cyclist $T_{cyc}$, as measured by the pedal-thrust torque sensor 3. On the basis of the error between these quantities, the controller 7 generates a reference motor command signal based on the cyclist torque $I°_{cyc}$, which is for example a current signal.

Preferably, the controller 7 comprises a filter 8 for filtering the cyclist torque signal, which treats the signal coming from the torque sensor 3. In fact, the pedal-thrust torque generally has an approximately sinusoidal trend, characterized by peaks and troughs.

According to one possible embodiment, the torque filter 8 supplies the value of the torque peaks as the output value of the cyclist torque.

Moreover, the filter 8 preferably filters the signal representive of the cyclist torque in such a manner as to eliminate the noise contained therein.

The system 1 further comprises a closed-loop controller 9 of the resisting torque on the bicycle.

The resisting torque is due to all environmental actions that oppose the advancing movement of the bicycle. This term particularly includes inertia of the bicycle (for example when the bicycle accelerates), the effect of the slope of the road, the effect of wind, and the rolling friction of the wheels.

The controller 9 receives at the input a reference resisting torque $T°_{env}$ and compares it with the effective resisting torque $T_{env}$. On the basis of the error between these quantities, the controller 9 generates a reference motor command signal based on the resisting torque $I°_{env}$, which is for example a current signal.

The resisting torque $T_{env}$ is determined by the controller 9 on the basis of at least the signals representive of the motor power, pedal-thrust cadence, and bicycle speed or acceleration.

Advantageously, for the purpose of determining the resisting torque, the controller 9 comprises a resisting torque estimating module 10 (in other words, an estimator).

According to a possible embodiment, the resisting torque estimating module 10 calculates the resisting torque on the basis of the following balance between motor power and resisting power:

$$P_{mot} + P_{cyclist} \cdot \eta_{trans} = P_{sprint} + P_{slope} + P_{wind} + P_{rolling}$$

in which:

- $P_{mot}$ is the power of the motor;
- $P_{cyclist}$ is the power supplied by the cyclist resulting from pedal thrust;
- $\eta_{trans}$ is the efficiency of the transmission 104 which is known *a priori;*
- $P_{sprint}$ is the power due to the inertial forces, for example when the bicycle accelerates;
- $P_{slope}$ is the power due to slope;
- $P_{wind}$ is the power due to the resisting action of wind;
- $P_{roll}$ is the power due to rolling of the wheels.

From the reported balance of powers, it follows that the resisting power $P_{resistant}$ is given by the following equation:

$$P_{resistant} = P_{mot} + P_{cyclist} \cdot \eta_{trans} - P_{sprint}$$

All the terms appearing in the equation above are measurable owing to the sensors comprised in the system.

In fact,

- motor power $P_{mot}$ can be measured by the motor power sensor 5, for example from the current of the motor $I_{motor}$, according to that which has been stated previously;
- cyclist power $P_{cyclist}$ is given by the product of the cyclist torque, which is detectable by the torque sensor 3, and the pedal-thrust rate, which is detectable by the pedal-thrust cadence sensor 2;
- power due to inertial forces $P_{sprint}$ is given by the product of the mass of the bicycle and the cyclist (which can be set each time on the basis of the actual weight of the cyclist or, with greater approximation, it can be set once at a fixed value), acceleration of the bicycle and speed of the bicycle, these two latter values being detectable by the acceleration or speed sensor 4.

The resisting torque $T_{env}$ can then be calculated from the resisting power $P_{resistant}$ thus determined, for example by dividing this latter value by the angular velocity of the wheel 102, this latter value also being determinable from the signal supplied by the acceleration or speed sensor 4.

The system 1 further comprises a dividing module 11 (in other words, a divider) configured to generate the motor reference command signal $I°_{mot}$ from the reference motor command signal based on the cyclist torque $I°_{cyc}$, from the reference motor command signal based on the resisting torque $I°_{env}$, from the resisting torque $T_{env}$ estimated by the resisting torque estimating module 10, and on the basis of a reference dividing parameter $\alpha$.

The dividing module 11 is realized for example with an electronic circuit mounted on the bicycle 100, particularly by means of an integrated circuit mounted inside the hub of the rear wheel 102 of the bicycle 100.

In particular, the dividing module 11 supplies as output a weight $\beta$ such that the motor reference command signal $I°_{mot}$ is given by the weighted sum on the basis of the weight $\beta$ of the reference motor command signal based on the cyclist torque $I°_{cyc}$ and of the reference motor command signal based on the resisting torque $I°_{env}$:

$$I°_{mot} = \beta \cdot I°_{cyc} + (1-\beta) \cdot I°_{env}$$

in which the weight $\beta$ is comprised between 0 and 1.

The relationship between the weight $\beta$, the resisting torque $T_{env}$ and the reference dividing parameter $\alpha$ is preferably predefined.

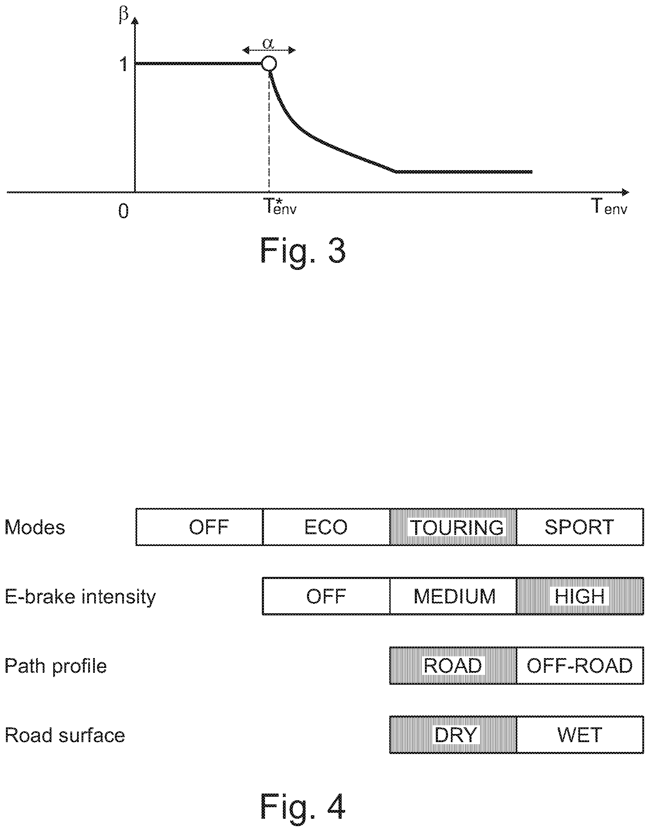

By way of example, Figure 3 shows a curve that links the weight $\beta$ and resisting torque $T_{env}$ by a constant reference dividing parameter value $\alpha$.

According to the curve shown, the weight $\beta$ remains constant and equal to 1 (which means that the motor reference command signal $I°_{mot}$ is equal to the reference motor command signal based on the cyclist torque $I°_{cyc}$) for low values of the resisting torque $T_{env}$ to a threshold value $T_{env}*$. For example, this situation can correspond to motion of the bicycle on flat land, or on a route with a low gradient, at a constant speed or with slight variations, in the absence of or with a limited presence of wind. As the resisting torque $T_{env}$ increases, for example because the gradient increases, the weight $\beta$ decreases tending towards zero. This means that as the resisting toque $T_{env}$ increases, the contribution of the reference motor command based on the resisting torque $I°_{env}$ increases until it becomes preponderant.

By varying the reference dividing parameter $\alpha$, it is possible, for example, to modify the threshold resisting torque value $T_{env}*$, starting from which the weight $\beta$ decreases. Low threshold resisting torque values $T_{env}$ lead to frequent intervention of the motor (given that the contribution of the reference motor command based on the resisting torque $I°_{env}$ prevails) and thus to the reduction of effort on the part of the cyclist, but also of the autonomy of the bicycle, in a manner that is substantially independent of the pedal-thrust torque of the cyclist, whereas high threshold resisting torque values $T_{env}*$ imply a greater effort on the part of the cyclist, due to the greater contribution of the reference motor command signal based on the cyclist torque $I°_{cyc}$. In this second case, intervention of the motor is generally correlated with the pedal-thrust action of the cyclist.

More specifically, driving torque is generally supplied by the motor for high values of pedal-thrust torque of the cyclist, that is, when there is a high level of effort on the part of the cyclist.

Note that in both conditions, motor interlock is preferably activated only in the presence of pedalling on the part of the cyclist.

When the resisting torque $T_{env}$ is negative, that is, when it is a driving torque (which generally results in the bicycle tending to accelerate) the weight $\beta$ is null and thus the motor reference command signal $I°_{mot}$ is equal to the reference motor command signal based on the resisting torque $I°_{env}$.

The condition consisting of a positive reference resisting torque $T°_{env}$ and a negative effective resisting torque $T_{env}$ results in a positive error between these two values. Therefore, the reference motor command based on the resisting torque $I°_{env}$ shall be a negative current, that is, the motor shall act as a generator, braking the bicycle and recharging the batteries, recovering the kinetic energy of the bicycle.

Referring back to Figure 2, the system 1 further comprises a reference generating module 12 (in other words, a reference generator) that is configured to generate the previously cited reference cyclist torque $T°_{cyc}$, reference resisting torque $T°_{env}$, and reference dividing parameter $\alpha$. These reference values underlying the operation of the system 1 can be generated on the basis of different criteria and on the basis of different inputs.

According to a possible embodiment, the reference generating module 12 receives at the input a command signal from an external device 106 with which the cyclist is equipped, for example a mobile electronic device such as a smartphone or tablet. By means of the external device 106, the cyclist can set the laws that have to be followed by the reference cyclist torque $T°_{cyc}$ and the reference resisting torque $T°_{env}$.

For example, the cyclist can select higher or lower constant values for the reference cyclist torque $T°_{cyc}$ so as to calibrate his/her own effort (that is, the pedal-thrust torque he/she must apply) when the reference motor command signal based on the cyclist torque $I°_{cyc}$ prevails (that is, when the weight $\beta$ is equal to or near 1). Likewise, the cyclist can select higher or lower constant values for the reference resisting torque $T°_{cyc}$ so as to determine the conditions for intervention by the motor when the reference motor command signal based on the resisting torque $I°_{env}$ prevails. In this situation, for example, high reference resisting torque $T°_{env}$ values will result in less effort on the part of the cyclist even in the presence of very steep uphill routes. Lastly, adjustment of the reference dividing parameter $\alpha$ by the cyclist modifies generation of the weight $\beta$, as stated previously with reference to Figure 3.

Alternatively or additionally, the reference generating module 12 is configured to update the previously cited reference cyclist torque $T°_{cyc}$, reference resisting torque $T°_{env}$, and reference dividing parameter $\alpha$ automatically on the basis of the signals received at the input.

The modification criteria can be of various types in this additional mode as well.

For example, according to a possible embodiment, the reference generating module 12 is configured in such a manner as to generate the previously cited reference cyclist torque $T°_{cyc}$, reference resisting torque $T°_{env}$, and reference dividing parameter $\alpha$ on the basis of the charge level of the battery 105 and/or on the basis of the ratio of a gearbox 107, if provided in the transmission 104. This characteristic is schematically illustrated in Figure 2, including a module 13 for estimating the charge level and/or the transmission ratio of the gearbox 107.

As an example, for low charge levels, the reference generating module 12 will reduce the reference cyclist torque $T°_{cyc}$, the reference resisting torque $T°_{env}$ and the reference dividing parameter $\alpha$.

Of course, knowledge of the transmission ratio of the transmission 104 is required to obtain the torque actually applied to the wheel as a result of the pedal-thrust torque applied on the pedal-thrust group by the cyclist in the case that this ratio differs from 1.

Alternatively or additionally, the reference generating module 12 is configured in such a manner as to generate the previously cited reference cyclist torque $T°_{cyc}$, reference resisting torque $T°_{env}$, and reference dividing parameter $\alpha$

on the basis of signals representiive of biometric parameter for the cyclist (for example, representing the effort of the cyclist), coming from corresponding sensors, including body temperature sensors or heart rate sensors for example.

Alternatively or additionally, the reference generating module 12 is configured in such a manner as to generate the previously cited reference cyclist torque $T^\circ_{cyc}$, reference resisting torque $T^\circ_{env}$, and reference dividing parameter $\alpha$ on the basis of signals coming from sensors of the system itself, particularly the pedal-thrust cadence sensor 2 and/or the pedal-thrust torque sensor 3, the bicycle acceleration or speed sensor 4, and/or the sensor 5 for detecting the power/current $I_{motor}$ of the motor 101.

For example, the user can set the maximum cruising speed of the bicycle. When the bicycle is travelling downhill, the resisting torque $T_{env}$ is negative and the system 1 thus acts in such a manner that the motor 101 acts as a generator, automatically braking the bicycle. If the bicycle speed exceeds the cruising speed value set by the cyclist, the reference generating module 12 modulates the reference resisting torque $T^\circ_{env}$ in such a manner that bicycle slows down to a speed equal to the speed set by the cyclist.

For the purpose of enabling the system 1 to set the power delivery/absorption modes, it can be connected to or comprise a user interface device.

For example, this user interface device can be a touchscreen of a smartphone 106 in which a specific software application has been installed.

Figure 4 shows a possible on-screen display generated by the application running on the smartphone 106 with the following possible parameters that can be set by the user (that is, by the cyclist):

- "Modes": this parameter makes it possible to modify the maximum current of the motor $I_{mot}$ from a null value ("OFF": which coincides with the deactivated interlocked condition) to a maximum value ("SPORT") passing through increasing intermediate values ("ECO" and "TOURING"); delivery of the maximum power by the electric motor 101 is modulated in this manner.
- "E-brake intensity": this parameter makes it possible to modify the absolute value of the negative current of the motor when it is acting as a generator, braking the bicycle; it can be modified from a null value ("OFF", which coincides with the null energy recovery condition) to a maximum value ("HIGH", which coincides with the maximum energy recovery condition), passing through an intermediate value ("MEDIUM").
- "Path profile": this parameter makes it possible to set energy recovery by the motor acting as a generator, a condition corresponding to braking, in a deactivation condition ("OFF-ROAD") or in an automatic activation condition ("ROAD") according to the operation of the system 1 described hereinabove. Note that in the automatic activation condition, under certain conditions, for example when the bicycle is travelling downhill, braking is activated automatically with a certain intensity, which depends, among other factors, on the "E-brake intensity" parameter. Advantageously, in the case in which the "Path Profile" parameter is set on "ROAD", the system 1 also allows for activation of additional manual braking by the cyclist, which is always realized by making the motor function as a generator. For example, this manual braking can be activated by pedalling backwards or by means of a specific control, which can be arranged on the handlebars of the bicycle. In the case in which the "Path profile" parameter is set on "OFF-ROAD", the cyclist can activate manual braking, for example by pedalling backwards, or manually activate automatic braking, for example by using a specific control.
- "Road surface": this parameter further modulates the negative current of the motor for automatic braking, so that the braking action is different under wet ("WET") road and dry ("DRY") road conditions.

Note that in this description and in the appended claims, the system 1, as well as the elements indicated by the term "module", can be implemented by means of hardware devices (e.g. control units or processing units), by means of software or by means of a combination of hardware and software.

For example, the controller 7 of the torque applied by the cyclist and the controller 9 of the resisting torque on the bicycle are implemented by means of a suitable software code running on a processing unit (e.g. a microprocessor or microcontroller) mounted on the bicycle 100, particularly inside the hub of the rear wheel.

Alternatively, the controller 7 of the torque applied by the cyclist and the controller 9 of the resisting torque on the bicycle are implemented by means of one or more electronic circuits mounted on the bicycle 100, particularly by means of an integrated circuit mounted inside the hub of the rear wheel 102.

## Claims

1. System (1) for controlling the electric motor (101) of a pedal-assisted bicycle comprising said electric motor (101) coupled to a wheel (102) of the bicycle, a pedal-thrust group (103) connected to a wheel (102) of the bicycle, a battery (105) configured to exchange energy with the motor (102), said control system (1) comprising:

- a pedal-thrust cadence sensor (2) configured to detect a pedal-thrust rate exerted by a cyclist on the pedal-thrust group (103) and configured to generate a signal representive of the detected pedal-thrust rate;
- a pedal-thrust torque sensor (3) configured to detect a torque applied by the cyclist on the pedal-thrust group (103) and configured to generate a signal representive of the torque applied by the cyclist;
- an acceleration or speed sensor (4) of the bicycle , configured to generate a signal representive of the acceleration and speed of the bicycle;
- a sensor (5) for detecting the power of the motor (101) and configured to generate a signal representive of the detected power of the motor;
- a closed-loop controller (7) of the torque applied by the cyclist on the pedal-thrust group (103) , configured to generate a reference motor command signal based on the cyclist's torque ($I°_{cyc}$) based on the error between a reference cyclist torque ($T°_{cyc}$) and the cyclist effective applied torque ($T_{cyc}$) detected by said pedal-thrust torque sensor (3);
- a closed-loop controller (9) of the resisting torque of the bicycle (100), configured to generate a reference motor command signal based on the resisting torque ($I°_{env}$) based on the error between a reference resisting torque ($T°_{env}$) and an effective resisting torque ($T_{env}$) determined based on at least said signals representive of the motor power, of the pedal-thrust cadence, and of the bicycle speed or acceleration;
- a dividing module (11) configured to generate a motor reference command signal ($I°_{mot}$) based on said reference motor command signal based on the cyclist's torque ($I°_{cyc}$), on said reference motor command signal based on the resisting torque ($I°_{env}$), on said effective resisting torque ($T_{env}$), and based on a reference dividing parameter ($\alpha$);

2. Control system (1) according to claim 1, comprising a reference generating module (12) configured to change the value of the reference dividing parameter ($\alpha$).

3. Control system (1) according to claim 1 or 2, wherein said dividing module (11) is configured to determine a weight ($\beta$) so that the motor reference command signal ($I°_{mot}$) is obtained by the weighted sum based on said weight ($\beta$) of the reference motor command signal based on the cyclist's torque ($I°_{cyc}$) and of the reference motor command signal based on the resisting torque ($I°_{env}$), said weight ($\beta$) being determined on the basis of a predefined relationship between the weight ($\beta$), the effective resisting torque ($T_{env}$) and the reference dividing parameter ($\alpha$).

4. Control system (1) according to claim 3, wherein the dividing module (11) is configured so that the motor reference command signal ($I°_{mot}$) is obtained by the following relationship:

$$I°_{mot} = \beta \cdot I°_{cyc} + (1-\beta) \cdot I°_{env}$$

wherein:

- $I°_{mot}$ is the motor reference command signal;
- $I°_{cyc}$ is the reference motor command signal based on the cyclist's torque;
- $I°_{env}$ is the reference motor command signal based on the resisting torque;
- $\beta$ is said weight, comprised between 0 and 1.

5. Control system (1) according to claim 3 or 4, wherein the dividing module (11) is configured so that said weight ($\beta$) has values so that the motor reference command signal ($I°_{mot}$) is equal to the reference motor command signal based on the resisting torque ($I°_{env}$) when the effective resisting torque ($T_{env}$) is a negative torque, that is a driving torque, so that, for positive values of the reference resisting torque ($T°_{env}$), the motor reference command signal ($I°_{mot}$) is such that the motor (101) acts as a generator by exerting an automatic braking action on the bicycle (100) which increases as the error between the reference resisting torque ($T°_{env}$) and the effective resisting torque ($T_{env}$) increases.

6. Control system (1) according to anyone of claims from 3 to 5, wherein the dividing module (11) is configured so that said weight ($\beta$) takes values so that, when the effective resisting torque ($T_{env}$) is positive:

- the motor reference command signal ($I°_{mot}$) is equal to the reference motor command signal based on the cyclist's torque ($I°_{cyc}$) when the effective resisting torque ($T_{env}$) is less than a threshold resisting torque value ($T_{env}*$);
- the contribution of the reference motor command signal based on the resisting torque ($I°_{env}$) to the motor

reference command signal ($I°_{mot}$) increases as the value of the effective resisting torque ($T_{env}$) increases with respect to the threshold resisting torque value ($T_{env}$*) when the effective resisting torque ($T_{env}$) is greater than said threshold resisting torque value ($T_{env}$*),

wherein the threshold resisting torque value ($T_{env}$*) is variable as a function of the reference dividing parameter ($\alpha$).

7. Control system (1) according to anyone of the preceding claims, wherein said closed-loop controller (7) of the torque applied by the cyclist on the pedal-thrust group (103) comprises a filter (8) of the cyclist torque signal supplied by said pedal-thrust torque sensor (3), configured to generate the output value of the peaks of the cyclist torque signal supplied by said pedal-thrust torque sensor (3).

8. Control system (1) according to anyone of the preceding claims, wherein said closed-loop controller (9) of the resisting torque on the bicycle (100) comprises a resisting torque estimating module (10) configured to calculate the resisting power ($P_{resistant}$) based on the following relationship:

$$P_{resistant} = P_{mot} + P_{cyclist} \cdot \eta_{trans} - P_{sprint}$$

wherein:

- $P_{mot}$ is the power of the motor detected by said sensor (5) detecting the motor power;
- $P_{cyclist}$ is the power supplied by the cyclist due to the effect of the pedal-thrust, determined from said signals representative of the pedal-thrust torque and of the pedal-thrust speed;
- $\eta_{trans}$ is the efficiency of a transmission (104) arranged between the pedal-thrust group (103) and said bicycle wheel (102);
- $P_{sprint}$ is the power due to the inertial forces, determined from said signal representative of the acceleration or speed of the bicycle.

9. Control system (1) according to anyone of the preceding claims, wherein said reference generating module (12) is configured to determine said reference cyclist torque ($T°_{cyc}$), said reference resisting torque ($T°_{env}$) and said reference dividing parameter ($\alpha$) automatically based on f said signal representative of the pedal-thrust cadence, and/or based on said signal representative of the pedal-thrust torque, and/or based on said signal representative of the acceleration or speed of the bicycle, and/or based on said signal representative of the motor power.

10. Control system (1) according to anyone of the preceding claims, comprising a reference generating module (12) configured to generate said reference cyclist torque ($T°_{cyc}$), said reference resisting torque ($T°_{env}$) and said reference dividing parameter ($\alpha$).

11. Control system (1) according to claim 10, wherein said reference generating module (12) is connected to an external device (106) commandable by the cyclist and is configured to generate a cyclist command signal, wherein the reference cyclist torque ($T°_{cyc}$), the reference resisting torque ($T°_{env}$) and the reference dividing parameter ($\alpha$) are determined by the reference generating module (12) based on said cyclist command signal supplied by the external device (106).

12. Control system (1) according to anyone of the preceding claims, comprising a module for estimating the state of charge of said battery (105) and which is configured to generate a signal representing this estimate, wherein the reference generating module (12) is configured to determine said reference cyclist torque ($T°_{cyc}$), said reference resisting torque ($T°_{env}$) and said reference dividing parameter ($\alpha$) automatically on the basis of said signal representative of the state of charge of the battery (105).

13. Control system (1) according to anyone of the preceding claims, comprising a module for estimating the transmission ratio of a transmission (104) disposed between the pedal-thrust group (103) and said bicycle wheel (102), wherein the reference generating module (12) is configured to determine said reference cyclist torque ($T°_{cyc}$), said reference resisting torque ($T°_{env}$) and said reference dividing parameter ($\alpha$) automatically based on said signal representative of the transmission ratio of said transmission (104).

14. Control system (1) according to any one of the preceding claims, comprising one or more sensors for detecting biometric parameters of the cyclist, suitable for generating signals representative of the same, wherein the reference generating module (12) is configured to determine said reference cyclist torque ($T^\circ_{cyc}$), said reference resisting torque ($T^\circ_{env}$) and said reference dividing parameter ($\alpha$) automatically based on said signals representive of the biometric parameters of the cyclist,

the system further comprising a closed-loop controller (6) configured to perform a current feedback control of the motor (101) based on said motor reference command signal ($I^\circ_{mot}$), wherein the motor effective current ($I_{mot}$) is supplied by said sensor (5) for detecting the motor power (101).

15. Pedal-assisted bicycle comprising an electric motor (101) coupled to a wheel (102), a pedal-thrust group (103) connected to a wheel (102), a rechargeable battery (105) capable of exchanging energy with the electric motor (102), and a control system (1) of the electric motor according to anyone of the preceding claims.

**Patentansprüche**

1. System (1) zur Steuerung des Elektromotors (101) eines Fahrrads mit Tretunterstützung, umfassend den Elektromotor (101), der mit einem Rad (102) des Fahrrads gekoppelt ist, einen Pedalkörper (103), der mit einem Rad (102) des Fahrrads verbunden ist, einen Akku (105), der ausgelegt ist, um Energie mit dem Motor (102) auszutauschen, wobei das Steuerungssystem (1) Folgendes umfasst:

   - einen Trittfrequenzsensor (2), der ausgelegt ist, um eine Trittfrequenz zu erfassen, die von einem Radfahrer auf den Pedalkörper (103) ausgeübt wird, und der ausgelegt ist, um ein Signal zu generieren, das repräsentativ für die erfasste Trittfrequenz ist;
   - einen Tretkraftsensor (3), der ausgelegt ist, um eine Tretkraft zu erfassen, das vom Radfahrer auf den Pedalkörper (103) erzeugt wird, und der ausgelegt ist, um ein Signal zu generieren, das repräsentativ für die Tretkraft ist, die von einem Radfahrer erzeugt wird;
   - einen Beschleunigungs- oder Geschwindigkeitssensor (4) des Fahrrads, der ausgelegt ist, um ein Signal zu generieren, das repräsentativ für die Beschleunigung oder Geschwindigkeit des Fahrrads ist;
   - einen Sensor (5) zum Erfassen der Leistung des Motors (101), der ausgelegt ist, um ein Signal zu generieren, das repräsentativ für die erfasste Leistung des Motors ist;
   - eine Regelkreissteuerung (7) der vom Radfahrer auf den Pedalkörper (103) erzeugten Tretkraft, die ausgelegt ist, um ein Referenzmotorbefehlssignal zu generieren, das auf der vom Radfahrer erzeugten Tretkraft ($I^\circ_{cyc}$) basiert, basierend auf dem Fehler zwischen einem Radfahrerreferenztretkraft ($T^\circ_{cyc}$) und der effektiv vom Radfahrer erzeugten Tretkraft ($T^\circ_{cyc}$), die vom Tretkraftsensor (3) erfasst wird;
   - eine Regelkreissteuerung (9) des Widerstandsmoments des Fahrrads (100), die ausgelegt ist, um ein Referenzmotorbefehlssignal zu generieren, das auf dem Widerstandsmoment ($I^\circ_{env}$) basiert, basierend auf dem Fehler zwischen einem Referenzwiderstandsmoment ($T^\circ_{env}$) und einem effektiven Widerstandsmoment ($T_{env}$), das basierend auf mindestens den Signalen ermittelt wird, die repräsentativ für die Motorleistung, die Trittfrequenz und die Geschwindigkeit oder Beschleunigung des Fahrrads sind;
   - ein Teilungsmodul (11), das ausgelegt ist, um ein Motorreferenzbefehlssignal ($I^\circ_{mot}$) zu generieren, basierend auf dem Referenzmotorbefehlssignal, basierend auf der vom Radfahrer erzeugten Tretkraft ($I^\circ_{cyc}$), auf dem Referenzmotorbefehlssignal, basierend auf dem Widerstandsmoment ($I^\circ_{env}$), auf dem effektiven Widerstandsmoment ($T_{env}$), und basierend auf einem Referenzteilungsparameter ($\alpha$).

2. Steuerungssystem (1) nach Anspruch 1, umfassend ein Referenzgenerierungsmodul (12), das ausgelegt ist, um den Wert des Referenzteilungsparameters ($\alpha$) auszutauschen.

3. Steuerungssystem (1) nach Anspruch 1 oder 2, wobei das Teilungsmodul (11) ausgelegt ist, um eine Gewichtung ($\beta$) zu ermitteln, sodass das Motorreferenzbefehlssignal ($I^\circ_{mot}$) durch die gewichtete Summe erhalten wird, basierend auf der Gewichtung ($\beta$) des Referenzmotorbefehlssignals, basierend auf der vom Radfahrer erzeugten Tretkraft ($I^\circ_{cyc}$) und auf dem Referenzmotorbefehlssignal, basierend auf dem Widerstandsmoment ($I^\circ_{env}$), wobei die Gewichtung ($\beta$) auf der Basis einer vorgegebenen Beziehung zwischen der Gewichtung ($\beta$), dem effektiven Widerstandsmoment ($T_{env}$) und dem Referenzteilungsparameter ($\alpha$) ermittelt wird.

4. Steuerungssystem (1) nach Anspruch 3, wobei das Teilungsmodul (11) so ausgelegt ist, dass das Motorreferenzsteuerungssignal ($I^\circ_{mot}$) durch folgende Beziehung erhalten wird:

$$I^\circ_{mot} = \beta \cdot I^\circ_{cyc} + (1-\beta)\ I^\circ_{env},$$

wobei

- I°$_{mot}$ das Motorreferenzbefehlssignal ist;
- I°$_{cyc}$ das Referenzmotorbefehlssignal, basierend auf der vom Radfahrer erzeugten Tretkraft, ist;
- I°$_{env}$ das Referenzmotorbefehlssignal, basierend auf dem Widerstandsmoment, ist;
- β die Gewichtung, eingeschlossen zwischen 0 und 1, ist.

5. Steuerungssystem (1) nach Anspruch 3 oder 4, wobei das Teilungsmodul (11) so ausgelegt ist, dass die Gewichtung (β) Werte aufweist, sodass das Motorreferenzbefehlssignal (I°$_{mot}$) gleich dem Referenzmotorbefehlssignal, basierend auf dem Widerstandsmoment (I°$_{env}$) ist, wenn das effektive Widerstandsmoment (T$_{env}$) eine negative Kraft, d. h. eine Antriebskraft, ist, sodass das Motorreferenzbefehlssignal (I°$_{mot}$) bei positiven Werten des Referenzwiderstandsmoments (T°$_{env}$) so beschaffen ist, dass der Motor (101) als Generator wirkt, indem er eine automatische Bremswirkung auf das Fahrrad (100) ausübt, die zunimmt, wenn der Fehler zwischen dem Referenzwiderstandsmoment (T°$_{env}$) und dem effektiven Widerstandsmoment (T$_{env}$) zunimmt.

6. Steuerungssystem (1) nach einem der Ansprüche 3 bis 5, wobei das Teilungsmodul (11) so ausgelegt ist, dass die Gewichtung (β) Werte annimmt, sodass, wenn das effektive Widerstandsmoment (T$_{env}$) positiv ist,

- das Motorreferenzbefehlssignal (I°$_{mot}$) gleich dem Referenzmotorbefehlssignal, basierend auf der vom Radfahrer erzeugten Tretkraft (I°$_{cyc}$), ist, wenn das effektive Widerstandsmoment (T$_{env}$) geringer ist als ein Schwellenwert des Widerstandsmoments (T$_{env}$*);
- der Beitrag des Referenzmotorbefehlssignals, basierend auf dem Widerstandsmoment (I°$_{env}$), zum Motorreferenzbefehlssignal (I°$_{mot}$) zunimmt, wenn der Wert des effektiven Widerstandsmoments (T$_{env}$) gegenüber dem Schwellenwert des Widerstandsmoments (T$_{env}$*) zunimmt, wenn das effektive Widerstandsmoment (T$_{env}$) größer ist als der Schwellenwert des Widerstandsmoments (T$_{env}$*), wobei der Schwellenwert des Widerstandsmoments (T$_{env}$*) als eine Funktion des Referenzteilungsparameters (α) variabel ist.

7. Steuerungssystem (1) nach einem der vorhergehenden Ansprüche, wobei die Regelkreissteuerung (7) der vom Radfahrer auf den Pedalkörper (103) erzeugten Tretkraft einen Filter (8) des Signals der vom Radfahrer erzeugten Tretkraft umfasst, das vom Tretkraftsensor (3) übermittelt wird, ausgelegt, um den Ausgabewert der Spitzenwerte des Signals der vom Radfahrer erzeugten Tretkraft, das vom Tretkraftsensor (3) übermittelt wird, zu generieren.

8. Steuerungssystem (1) nach einem der vorhergehenden Ansprüche, wobei die Regelkreissteuerung (9) des Widerstandsmoments auf das Fahrrad (100) ein Modul zur Schätzung des Widerstandsmoments (10) umfasst, das ausgelegt ist, um die Widerstandsleistung (P$_{resistant}$) basierend auf folgender Beziehung zu berechnen:

$$P_{resistant} = P_{mot} + P_{cyclist}\ \eta_{trans} - P_{sprint},$$

wobei

- P$_{mot}$ die vom Sensor (5), der die Motorleistung erfasst, erfasste Leistung des Motors ist;
- P$_{cyclist}$ die Leistung ist, die der Radfahrer aufgrund der Wirkung des Pedaltritts bereitstellt, ermittelt von den Signalen, die repräsentativ für die Tretkraft und die Trittgeschwindigkeit sind;
- η$_{trans}$ die Effizienz einer Übertragung (104) ist, angeordnet zwischen dem Pedalkörper (103) und dem Fahrradrad (102);
- P$_{sprint}$ die Leistung aufgrund der Trägheitskräfte ist, ermittelt vom Signal, das repräsentativ für die Beschleunigung oder Geschwindigkeit des Fahrrads ist.

9. Steuerungssystem (1) nach einem der vorhergehenden Ansprüche, wobei das Referenzgenerierungsmodul (12) ausgelegt ist, um die Radfahrerreferenztretkraft (T°$_{cyc}$), das Referenzwiderstandsmoment (T°$_{env}$) und den Referenzteilungsparameter (α) automatisch zu ermitteln, basierend auf dem Signal, das repräsentativ für die Trittfrequenz ist, und/oder basierend auf dem Signal, das repräsentativ für die Tretkraft ist, und/oder basierend auf dem Signal, das repräsentativ für die Beschleunigung oder Geschwindigkeit des Fahrrads ist, und/oder basierend auf dem Signal, das repräsentativ für die Motorleistung ist.

10. Steuerungssystem (1) nach einem der vorhergehenden Ansprüche, umfassend ein Referenzgenerierungsmodul (12), das ausgelegt ist, um die Radfahrerreferenztretkraft (T°$_{cyc}$), das Referenzwiderstandsmoment (T°$_{env}$) und den

Referenzteilungsparameter ($\alpha$) zu generieren.

**11.** Steuerungssystem (1) nach Anspruch 10, wobei das Referenzgenerierungsmodul (12) mit einer externen Vorrichtung (106) verbunden ist, die vom Radfahrer gesteuert werden kann und ausgelegt ist, um ein Radfahrerbefehlssignal zu generieren, wobei die Radfahrerreferenztretkraft ($T^\circ_{cyc}$), das Referenzwiderstandsmoment ($T^\circ_{env}$) und der Referenzteilungsparameter ($\alpha$) durch das Referenzgenerierungsmodul (12) ermittelt werden, basierend auf dem Radfahrerbefehlssignal, das von der externen Vorrichtung (106) bereitgestellt wird.

**12.** Steuerungssystem (1) nach einem der vorhergehenden Ansprüche, umfassend ein Modul zum Schätzen des Ladezustands des Akkus (105), das ausgelegt ist, um ein Signal zu generieren, das repräsentativ für diese Schätzung ist, wobei das Referenzgenerierungsmodul (12) ausgelegt ist, um die Radfahrerreferenztretkraft ($T^\circ_{cyc}$), das Referenzwiderstandsmoment ($T^\circ_{env}$) und den Referenzteilungsparameter ($\alpha$) automatisch auf Basis des Signals zu ermitteln, das repräsentativ für den Ladezustand des Akkus (105) ist.

**13.** Steuerungssystem (1) nach einem der vorhergehenden Ansprüche, umfassend ein Modul zum Schätzen das Übersetzungsverhältnis eines Getriebes (104), das zwischen dem Pedalkörper (103) und dem Fahrradrad (102) angeordnet ist, wobei das Referenzgenerierungsmodul (12) ausgelegt ist, um die Radfahrerreferenztretkraft ($T^\circ_{cyc}$), das Referenzwiderstandsmoment ($T^\circ_{env}$) und den Referenzteilungsparameter ($\alpha$) automatisch basierend auf dem Signal, das repräsentativ für das Übersetzungsverhältnis des Getriebes (104) ist, zu ermitteln.

**14.** Steuerungssystem (1) nach einem der vorhergehenden Ansprüche, umfassend einen oder mehrere Sensoren zum Erfassen biometrischer Parameter des Radfahrers, die geeignet sind, um Signale zu generieren, die für diesen repräsentativ sind, wobei das Referenzgenerierungsmodul (12) ausgelegt ist, um die Radfahrerreferenztretkraft ($T^\circ_{cyc}$), das Referenzwiderstandsmoment ($T^\circ_{env}$) und den Referenzteilungsparameter ($\alpha$) automatisch basierend auf den Signalen, die repräsentativ für die biometrischen Parameter des Radfahrers sind, zu ermitteln, wobei das System zudem eine Regelkreissteuerung (6) umfasst, die ausgelegt ist, um eine Stromstärkenregelung des Motors (101) durchzuführen, basierend auf dem Referenzbefehlssignal ($I^\circ_{mot}$) des Motors, wobei der effektive Strom des Motors ($I_{mot}$) vom Sensor (5) zur Erfassung der Motorleistung (101) bereitgestellt wird.

**15.** Fahrrad mit Tretunterstützung, umfassend einen Elektromotor (101), der mit einem Rad (102) gekoppelt ist, einen Pedalkörper (103), der mit einem Rad (102) verbunden ist, einen wiederaufladbaren Akku (105), der in der Lage ist, Energie mit dem Elektromotor (102) auszutauschen, sowie ein Steuerungssystem (1) des Elektromotors nach einem der vorhergehenden Ansprüche.

**Revendications**

**1.** Système (1) de contrôle du moteur électrique (101) d'une bicyclette à pédalage assisté comprenant ledit moteur électrique (101) couplé à une roue (102) de la bicyclette, un groupe de pédalage (103) relié à une roue (102) de la bicyclette, une batterie (105) configurée pour échanger de l'énergie avec le moteur (102), ledit système de contrôle (1) comprenant :

- un capteur de cadence de pédalage (2) configuré pour détecter une vitesse de pédalage exercée par un cycliste sur le groupe de pédalage (103) et configuré pour générer un signal représentatif de la vitesse de pédalage détectée ;
- un capteur de couple de pédalage (3) configuré pour détecter un couple appliqué par le cycliste sur le groupe de pédalage (103) et configuré pour générer un signal représentatif du couple appliqué par le cycliste ;
- un capteur d'accélération ou de vitesse (4) de la bicyclette configuré pour générer un signal représentatif de l'accélération et de la vitesse de la bicyclette ;
- un capteur (5) de détection de la puissance du moteur (101) et configuré pour générer un signal représentatif de la puissance détectée du moteur ;
- un contrôleur en boucle fermée (7) du couple appliqué par le cycliste sur le groupe de pédalage (103), configuré pour générer un signal de commande de moteur de référence basé sur le couple du cycliste ($I^\circ_{cyc}$) basé sur l'erreur entre un couple du cycliste de référence ($T^\circ_{Cyc}$) et le couple effectif appliqué par le cycliste ($T^\circ_{cyc}$) détecté par ledit capteur de couple de pédalage (3) ;
- un contrôleur en boucle fermée (9) du couple résistant de la bicyclette (100), configuré pour générer un signal de commande de moteur de référence basé sur le couple résistant ($I^\circ_{env}$) basé sur l'erreur entre un couple résistant de référence ($T^\circ_{env}$) et un couple résistant effectif ($T_{env}$) déterminé sur la base d'au moins lesdits signaux représentatifs de la puissance du moteur, de la cadence de pédalage et de la vitesse ou de l'accélération de la bicyclette ;
- un module répartiteur (11) configuré pour générer un signal de commande de référence de moteur (I°$_{mot}$) basé sur ledit signal de commande de moteur de référence basé sur le couple du cycliste (I°$_{cyc}$), sur ledit signal de commande de moteur de référence basé sur le couple résistant (I°$_{env}$), sur ledit couple résistant effectif (T$_{env}$), et basé sur un paramètre de répartition de référence (α) ;

2. Système de contrôle (1) selon la revendication 1, comprenant un module de génération de référence (12) configuré pour modifier la valeur du paramètre de répartition de référence (α).

3. Système de contrôle (1) selon la revendication 1 ou 2, dans lequel ledit module répartiteur (11) est configuré pour déterminer un poids (β) de sorte que le signal de commande de référence du moteur (I°$_{mot}$) est obtenu par la somme pondérée basée sur ledit poids (β) du signal de commande de référence du moteur basé sur le couple du cycliste (I°$_{cyc}$) et du signal de commande de référence du moteur basé sur le couple résistant (I°$_{env}$), ledit poids (β) étant déterminé sur la base d'une relation prédéfinie entre le poids (β), le couple résistant effectif (T$_{env}$) et le paramètre de répartition de référence (α).

4. Système de contrôle (1) selon la revendication 3, dans lequel le module répartiteur (11) est configuré de sorte que le signal de commande de référence du moteur (I°$_{mot}$) soit obtenu par la relation suivante :

$$I°_{mot} = \beta \cdot I°_{cyc} + (1-\beta)\ I°_{env}$$

dans lequel :

- I°$_{mot}$ est le signal de commande de référence du moteur ;
- I°$_{cyc}$ est le signal de commande de référence du moteur basé sur le couple du cycliste ;
- I°$_{env}$ est le signal de commande de référence du moteur basé sur le couple résistant ;
- β est ledit poids, compris entre 0 et 1.

5. Système de contrôle (1) selon la revendication 3 ou 4, dans lequel le module répartiteur (11) est configuré de sorte que ledit poids (β) ait des valeurs telles que le signal de commande de référence du moteur (I°$_{mot}$) est égal au signal de commande de référence du moteur basé sur le couple résistant (I°$_{env}$) lorsque le couple résistant effectif (T$_{env}$) est un couple négatif, c'est-à-dire un couple moteur, de sorte que, pour des valeurs positives du couple résistant de référence (T°$_{env}$), le signal de commande de référence du moteur (I°$_{mot}$) est tel que le moteur (101) agit comme un générateur en exerçant une action de freinage automatique sur la bicyclette (100) qui augmente à mesure que l'erreur entre le couple résistant de référence (T°$_{env}$) et le couple résistant effectif (T$_{env}$) augmente.

6. Système de contrôle (1) selon l'une quelconque des revendications de 3 à 5, dans lequel le module répartiteur (11) est configuré de sorte que ledit poids (β) prend des valeurs telles que, lorsque le couple résistant effectif (T$_{env}$) est positif :

- le signal de commande de référence du moteur (I°$_{mot}$) est égal au signal de commande de référence du moteur basé sur le couple du cycliste (I°$_{cyc}$) lorsque le couple résistant effectif (T$_{env}$) est inférieur à une valeur seuil de couple résistant (T$_{env}$*) ;
- la contribution du signal de commande de référence du moteur basé sur le couple résistant (I°$_{env}$) au signal de commande de référence du moteur (I°$_{mot}$) augmente lorsque la valeur du couple résistant effectif (T$_{env}$) augmente par rapport à la valeur de couple résistant de seuil (T$_{env}$*) lorsque le couple résistant effectif (T$_{env}$) est supérieur à ladite valeur de couple résistant de seuil (T$_{env}$*),

dans lequel la valeur de couple résistant de seuil (T$_{env}$*) est variable en fonction du paramètre de répartition de référence (α).

7. Système de contrôle (1) selon l'une quelconque des revendications précédentes, dans lequel ledit contrôleur en boucle fermée (7) du couple appliqué par le cycliste sur le groupe de pédalage (103) comprend un filtre (8) du signal de couple du cycliste fourni par ledit capteur de couple de pédalage (3), configuré pour générer la valeur de sortie des pics du signal de couple du cycliste fourni par ledit capteur de couple de pédalage (3).

8. Système de contrôle (1) selon l'une quelconque des revendications précédentes, dans lequel ledit contrôleur en boucle fermée (9) du couple résistant sur la bicyclette (100) comprend un module d'estimation du couple résistant (10) configuré pour calculer la puissance résistante ($P_{resistant}$) sur la base de la relation suivante :

$$P_{resistant} = P_{mot} + P_{cyclist}\ \eta_{trans} - P_{sprint}$$

dans lequel :

- $P_{mot}$ est la puissance du moteur détectée par ledit capteur (5) détectant la puissance du moteur ;
- $P_{cyclist}$ est la puissance fournie par le cycliste en raison de l'effet de pédalage, déterminée à partir desdits signaux représentatifs du couple de pédalage et de la vitesse de pédalage ;
- $\eta_{trans}$ est le rendement d'une transmission (104) disposée entre le groupe de pédalage (103) et ladite roue de bicyclette (102) ;
- $P_{sprint}$ est la puissance due aux forces d'inertie, déterminée à partir dudit signal représentatif de l'accélération ou de la vitesse de la bicyclette.

9. Système de contrôle (1) selon l'une quelconque des revendications précédentes, dans lequel ledit module de génération de référence (12) est configuré pour déterminer ledit couple du cycliste de référence ($T°_{cyc}$), ledit couple résistant de référence ($T°_{env}$) et ledit paramètre de répartition de référence ($\alpha$) automatiquement sur la base dudit signal représentatif de la cadence de pédalage, et/ou sur la base dudit signal représentatif du couple de pédalage, et/ou sur la base dudit signal représentatif de l'accélération ou de la vitesse de la bicyclette, et/ou sur la base dudit signal représentatif de la puissance du moteur.

10. Système de contrôle (1) selon l'une quelconque des revendications précédentes, comprenant un module de génération de référence (12) configuré pour générer ledit couple du cycliste de référence ($T°_{cyc}$), ledit couple résistant de référence ($T°_{env}$) et ledit paramètre de répartition de référence ($\alpha$).

11. Système de contrôle (1) selon la revendication 10, dans lequel ledit module de génération de référence (12) est relié à un dispositif externe (106) pouvant être commandé par le cycliste et est configuré pour générer un signal de commande du cycliste, dans lequel le couple du cycliste de référence ($T°_{cyc}$), le couple résistant de référence ($T°_{env}$) et le paramètre de répartition de référence ($\alpha$) sont déterminés par le module de génération de référence (12) sur la base dudit signal de commande du cycliste fourni par le dispositif externe (106).

12. Système de contrôle (1) selon l'une quelconque des revendications précédentes, comprenant un module d'estimation de l'état de charge de ladite batterie (105) et étant configuré pour générer un signal représentatif de cette estimation, dans lequel le module de génération de référence (12) est configuré pour déterminer ledit couple du cycliste de référence ($T°_{cyc}$), ledit couple résistant de référence ($T°_{env}$) et ledit paramètre de répartition de référence ($\alpha$) automatiquement sur la base dudit signal représentatif de l'état de charge de la batterie (105).

13. Système de contrôle (1) selon l'une quelconque des revendications précédentes, comprenant un module d'estimation du rapport de transmission d'une transmission (104) disposée entre le groupe de pédalage (103) et ladite roue de bicyclette (102), dans lequel le module de génération de référence (12) est configuré pour déterminer ledit couple du cycliste de référence ($T°_{Cyc}$), ledit couple résistant de référence ($T°_{env}$) et ledit paramètre de répartition de référence ($\alpha$) automatiquement sur la base dudit signal représentatif du rapport de transmission de ladite transmission (104).

14. Système de contrôle (1) selon l'une quelconque des revendications précédentes, comprenant un ou plusieurs capteurs pour détecter des paramètres biométriques du cycliste, adaptés pour générer des signaux représentatifs de ceux-ci, dans lequel le module de génération de référence (12) est configuré pour déterminer ledit couple du cycliste de référence ($T°_{cyc}$), ledit couple résistant de référence ($T°_{env}$) et ledit paramètre de répartition de référence ($\alpha$) automatiquement sur la base desdits signaux représentant les paramètres biométriques du cycliste, le système comprenant de plus un contrôleur en boucle fermée (6) configuré pour effectuer un contrôle à rétroaction de courant du moteur (101) sur la base dudit signal de commande de référence du moteur ($I°_{mot}$), dans lequel le courant effectif du moteur ($I_{mot}$) est fourni par ledit capteur (5) pour détecter la puissance du moteur (101).

15. Bicyclette à pédalage assisté comprenant un moteur électrique (101) couplé à une roue (102), un groupe de pédalage (103) relié à une roue (102), une batterie rechargeable (105) capable d'échanger de l'énergie avec le moteur électrique (102), et un système de contrôle (1) du moteur électrique selon l'une quelconque des revendications précédentes.

Fig. 1

Fig. 2

Fig. 3

| Modes | OFF | ECO | TOURING | SPORT |
|---|---|---|---|---|

| E-brake intensity | OFF | MEDIUM | HIGH |
|---|---|---|---|

| Path profile | ROAD | OFF-ROAD |
|---|---|---|

| Road surface | DRY | WET |
|---|---|---|

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016016636 A1